# EUROPEAN PATENT SPECIFICATION

(11) **EP 1 910 888 B1**
(45) Date of publication and mention of the grant of the patent: **11.11.2009**
(21) Application number: 06766363.3
(22) Date of filing: 27.06.2006
(51) Int. Cl.: G02C 5/22, A45F 5/02

(54) **A SPECTACLES HOLDER DEVICE**
BRILLENHALTEVORRICHTUNG
DISPOSITIF DE SUPPORT DE LUNETTES

(30) Priority: 28.06.2005 IT PD20050194
(43) Date of publication of application: 16.04.2008
(73) Proprietor: Mauro, Vincenzo, 38053 Castello Tesino (IT)
(72) Inventor: Mauro, Vincenzo, 38053 Castello Tesino (IT)
(74) Representative: Pulieri, Gianluca Antonio
(86) International application number: PCT/IT2006/000494
(87) International publication number: WO 2007/000792

(56) References cited:
- US-A1- 2004 255 501
- US-B1- 6 168 273
- US-B1- 6 425 664
- US-B1- 6 474 812

## Description

The present invention relates to a spectacles holder device.

The subject spectacles holder device in general falls within the field of spectacles, and more in particular, in the field of accessories for spectacles, and is advantageously intended for replacing the conventional support string for holding a pair of spectacles on a wearer, when not worn.

As known, people with poor short-sight, for example suffering from hypermetropia or presbyopia, and who mainly use glasses for reading, need to continuously wear and take off their glasses when they have to repeatedly move their sight from a close up point to a far away point and vice versa.

Traditionally, to always have the spectacles at hand, these individuals wear their glasses hanging on the neck by a support string having the two ends thereof attached to the ends of the spectacles temples. In this way, the spectacles need not be put away in a pocket, when they are not used, thus also preventing the risk of accidentally losing them.

A similar need - despite less urgent- exists also for those using sunglasses, when they move from outdoor and very lighted places to indoor or shadowy places.

Recently, in replacement of the above support string, which sometimes may be irritating or cumbersome, and for someone aesthetically not very pleasant, spectacles holder pins of various types have been proposed, to pin on the chest, provided with an eyelet or a hook for hanging the spectacles thereon.

As compared to the strings, even though these spectacles holder pins are aesthetically more pleasant and certainly less cumbersome, they are not as practical and functional. In fact, the spectacles hook up is not as immediate and easy, since the user must first find the hook or the eyelet without the aid of the spectacles and, before leaving them, he/she must first make sure that they are properly hung up.

A spectacles holder device is further known from patent US 6168273 which allows quickly hanging a pair of spectacles to the clothes worn by the user without the aid of mechanical means like eyelets or hooks. This device comprises a magnetic support to be applied to the clothes and a magnetic element to be separately attached to the spectacles frame. Operatively, the user can put away the spectacles by hanging them to his/her clothes, by simply moving the magnetic element in contact with the above magnetic support.

Even though this device solves the problems mentioned above, nevertheless it cannot be used on any type of frames. In fact, if the frame has not been directly made with the magnetic element already incorporated therein, it is necessary to proceed - sometimes in a quite difficult way - to attach the magnetic element to the frame. In this case it is necessary to intervene on the frame by obtaining a seat therein, inside which the magnetic element is seated. Alternatively, if the magnetic element is shaped as a thin plate, it is possible to wind it about a suitable portion of the frame (for example a temple or a portion of the front) thus avoiding any operations on the frame. However, this latter solution is not easy to actuate given the limited free space available on a frame. In fact, having to have a magnetic mass sufficient for supporting the weight of a pair of spectacles, it is necessary to use a very extended plate, which with difficulty may be completely wound on a portion of frame.

A device is also known from patent US 6168273 for applying an auxiliary spectacles holder structure, for example for sunglasses, to a standard frame. In particular, the device comprises two magnetic clips connectable to the hinges of the two temples and intended for magnetically coupling to two corresponding magnetic portions arranged at the sides of the auxiliary spectacles holder structure. Each magnetic clip consists of an arm which at an end is associated to the hinge of the temple through the screw fixing the hinge itself and at the opposite (free) end carries a magnetic body attached thereto. The arm is attached so as to arrange the magnetic body in the space comprised between the hinge and the front of the frame, in the proximity of the latter.

Given this arrangement, the magnetic body is not usable as an element suitable for coupling the spectacles to a magnetic support arranged on the clothes of a wearer. In fact, even if one wanted to improperly use such magnetic body as a coupling element, due to the above spatial arrangement, the magnetic interaction of such body with the support would bring the glasses in contact with the clothes, with the risk of friction and damage of the same.

In this situation, therefore, the object of the present invention is to eliminate the disadvantages of the prior art mentioned above by providing a spectacles holder device to be applied to the clothes of a wearer which is usable with any type of spectacles frame and which prevents the spectacles glasses to contact the clothes on which such device is applied.

Another object of the present invention is to provide a spectacles holder device which can be easily applied to the clothes and as easily removed, without using adhesive means or mechanical means, such as pins or Velcro strips.

Another object of the present invention is to provide a spectacles holder device which is simple and inexpensive to manufacture.

The technical features of the invention, according to the above objects, can be clearly found in the contents of the claims below and the advantages of the same will appear more clearly from the following detailed description, made with reference to the annexed drawings, which show a purely exemplifying and non-limiting embodiment thereof, wherein:

- Figure 1 shows a view of the spectacles holder device according to the invention worn by a user;

- Figure 2 shows a side view of a detail of the spectacles holder device according to the invention relating to supporting means;

- Figure 3 shows a side exploded view of a detail of the spectacles holder device obtained according to a first embodiment of the invention relating to holding means;

- Figure 4 shows a side exploded view of a detail of the spectacles holder device obtained according to a second embodiment of the invention relating to holding means;

- Figure 5 shows a side view of a detail of the spectacles holder device obtained according to a third embodiment of the invention relating to holding means;

- Figure 6 shows a top view of the holding means shown in Figure 5;

- Figure 7 shows a top view of a detail of the spectacles holder device obtained according to a fourth embodiment of the invention relating to holding means; and

- Figure 8 shows a side view of the holding means shown in Figure 7.

With reference to the annexed drawings, reference numeral 1 globally denotes the spectacles holder device object of the present invention. The spectacles holder device 1 is intended for replacing the conventional support string for holding a pair of spectacles on the user when he/she does not need to use them.

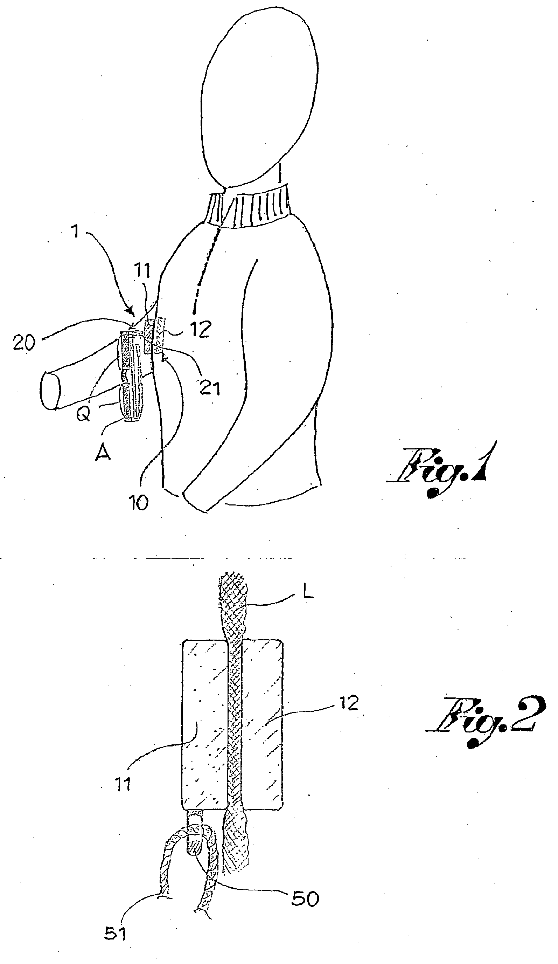

As can be seen in figure 1, the spectacles holder device 1 consists of supporting means 10 intended for being associated to the clothes, preferably at the user's chest, and of holding means 20, intended for being mechanically associated to a pair of spectacles A. The holding means 20 are removably connectable to the supporting means 10 thanks to a reciprocal magnetic interaction in order to hold the pair of spectacles A on the clothes.

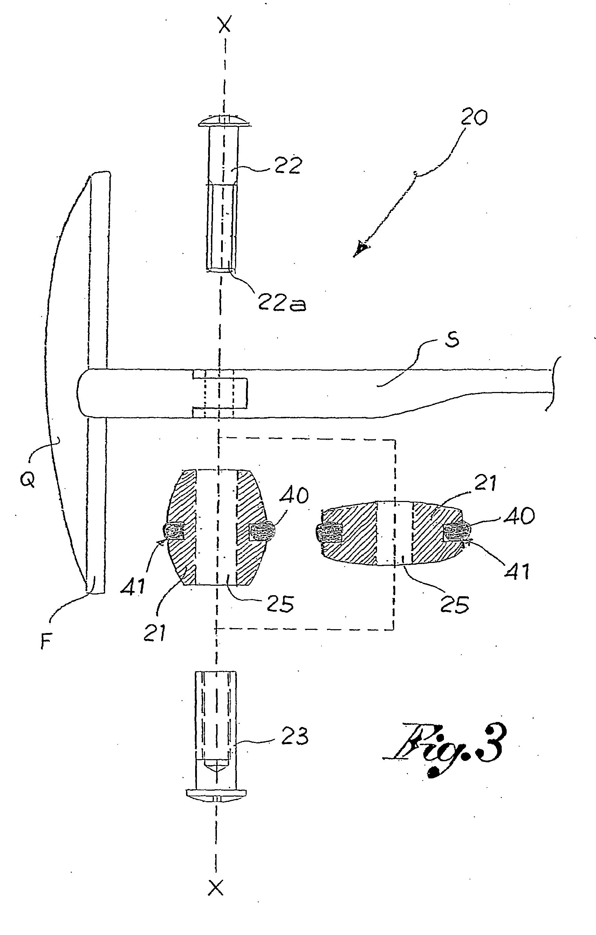

According to the invention, as can be seen in Figures 3 to 8, the holding means 20 are mechanically attached on a pair of spectacles A at one of the hinges connecting temples S to front F.

The term "front" is understood to refer to the frame portion intended for supporting a pair of spectacles glasses.

For this end, the holding means 20 comprise a threaded rod 22 to be inserted along the axis of rotation X of the hinge in replacement of the screw that is the pivot of the hinge itself.

Preferably, the threaded rod 22 must have a greater longitudinal development than that of the original screw fixing the temple, so that once mounted, the threaded rod 22 may protrude relative to temple S, at the top or at the bottom, with an end portion 22a along the axis of rotation X.

The holding means 20 further comprise a coupling element 21, which is made of a magnetic or ferromagnetic material or in any case sensitive to the magnetic field, and is susceptible of magnetically connecting to a magnetic element 11 of the supporting means 10.

The coupling element 21 is intended for being mechanically coupled to the spectacles at the end portion 22a of the threaded rod 22, with manners that may vary according to the type of frame.
According to the invention, the above coupling element 21 is arranged in line with the axis of rotation X or, with reference to the temples in opened position, it is arranged in a position comprised between the above axis X and the free end of the temple.
In other words, imagining a plane parallel to the front (and to the spectacles glasses) and passing by the temple hinges, the coupling element 21 is arranged in the space portion where the temples are arranged, that is, relative to such plane, at the side opposite the front. At most, the coupling element can be astride of such plane when it is arranged aligned with the axis of rotation X of one of the hinges, but it can never be completely arranged in the space portion occupied by the front.
In this way, when the coupling element 21 is moved in contact with the magnetic element 11 with the temples folded on front F in closed position, the magnetic interaction between the magnetic element 11 and the coupling element 21 orientates the temples towards the clothes, thus preventing the spectacles glasses supported by front F from contacting the clothes themselves, with the risk of scratching.
With reference to the temples, the expression "opened position" refers to the position taken by the temples when the spectacles are worn, that is, substantially orthogonal to the glasses. Similarly, the expression "closed position" refers to the smaller overall dimension position taken by the temples when the spectacles are folded, that is, substantially parallel to the glasses.

Advantageously, the coupling element 21 must have such mass as to generate a magnetic interaction with the supporting means 10 capable of supporting the weight of a pair of spectacles. To this end, the use of the holding means 20, with the relevant coupling element 21, is necessary not only for the models of spectacles provided with metal temples S made of plastic material, but also for those models provided with metal temples S. In fact, the metal mass of temples S usually is not sufficient for ensuring alone a safe anchoring of the spectacles to the supporting means 10.

As explained in the description below, the holding means 20 are configured so as to be associated to any kind of frame.

Advantageously, as can be seen in Figure 2, the supporting means 10 comprise a magnetic element 11 and a fixing element 12, made of magnetic or ferromagnetic material, or in any case sensitive to the magnetic field, separably associable to one another by effect of a reciprocal magnetic interaction.

The magnetic element 11 must have such mass as to generate a sufficient magnetic field to safely support the weight of a pair of spectacles and can be manufactured with a natural magnet or with an alloy of ferromagnetic metals, such as iron, cobalt, nickel or niobium, whereas the fixing element 12 is preferably made of a ferrous material or in any case sensitive to the magnetic field, such as steel.

Operatively, the supporting means 10 are secured to the user's clothes by interposing a hem L of the clothes between the magnetic-element 11 and the fixing element 12. In this way, thanks to the reciprocal magnetic interaction the two elements 11 and 12 remain in strict contact with hem L which can thus support them, preventing the drop thereof.

Preferably, the magnetic element 11 and the fixing element 12 have a plate shape or in any case, substantially flat shape, so that the magnetic interaction surface is wide and the contact thereof with the clothes is facilitated.

For the supporting means 10 to effectively interact with the holding means 20, the magnetic element 11 must be located on hem L of the clothes, so that the magnetic field faces outwards, whereas the fixing element 12 must be placed under hem L, facing inwards.

Advantageously, the magnetic element 11 needs not necessarily be arranged on the surface but can optionally be covered with another garment, so as to not be visible, being in any case capable of carrying out its function also underneath the clothes.

In accordance with a first embodiment shown in Figure 3, the coupling element 21 is arranged coaxially to the threaded rod 22 along the rotation axis X of the hinge, so that it can protrude at the bottom relative to temple S. In this way, the coupling element 21 is substantially parallel relative to glasses Q of the spectacles and once attached to the magnetic element 11, it can hold the spectacles arranging them with the temples facing the clothes and the glasses facing outwards and substantially parallel to the user's body, in the minimal projection position.

Advantageously, in this first embodiment, the holding means 20 comprise a bush 23, which is internally counter-threaded to connect to the threaded rod 22 and on the other hand is externally smooth. The coupling element 21 is supported by bush 23 so as to be coaxially aligned to the threaded rod 22.

Preferably, to this end, the coupling element 21 is provided with a through hole 25 suitable for receiving bush 23 therein. In substance, bush 23 acts as a rotation pin and holds the coupling element 21 in position, preventing the extraction thereof, thanks to its enlarged head position. In this way, even though the coupling element 21 is connected to the threaded rod 22, it is free to rotate about the rotation axis X of the hinge.

This first embodiment is preferably adopted for all those models of spectacles wherein the hinge screw is directly screwed on temple S. In this way, the coupling element 21 is prevented from hindering the free rotation of the threaded rod 22 and thus the opening and closing movement of temple S.

Advantageously, in the models of spectacles wherein the screw is screwed on front F and therefore is not integral with temple S, the coupling element 21 is not required to be released from the threaded rod. It is therefore possible to associate the magnetic element 21 directly to rod 22 without the interposition of bush 23.

In this first embodiment, the coupling element 21 is shaped so that the mass thereof is symmetrically distributed around the through hole 25. The shape of the coupling element 21 is selected on the basis of the space available between front F of the spectacles and the rotation axis X of temple S.

Advantageously, the coupling element 21 can for example have a disc shape or, for space reasons, it can have a more tapered shape, for example ovoid.

Advantageously, the coupling element 21 can also be provided on the outer surface thereof with one or more inserts 40 of a rubber material, suitable for preventing direct contact between the coupling element 21 and the clothes. In this way, it is possible to prevent the coupling element 21 from causing creases or abrasions on the clothes over time.

Advantageously, inserts 40 may consist, for example, of rings inserted into special grooves 41 obtained on the outer surface of the coupling element 21.

For the same reason, also the magnetic element 11 and the fixing element 12 can be at least partly covered with a layer of plastic or rubber material, for example of silicone type, for preventing direct contact thereof with the clothes. These covers or inserts of plastic or rubber material further allow eliminating the metal noise that would generate at the contact between the metal element 11 and the coupling element 21 upon the connection of the spectacles to the supporting means 10.

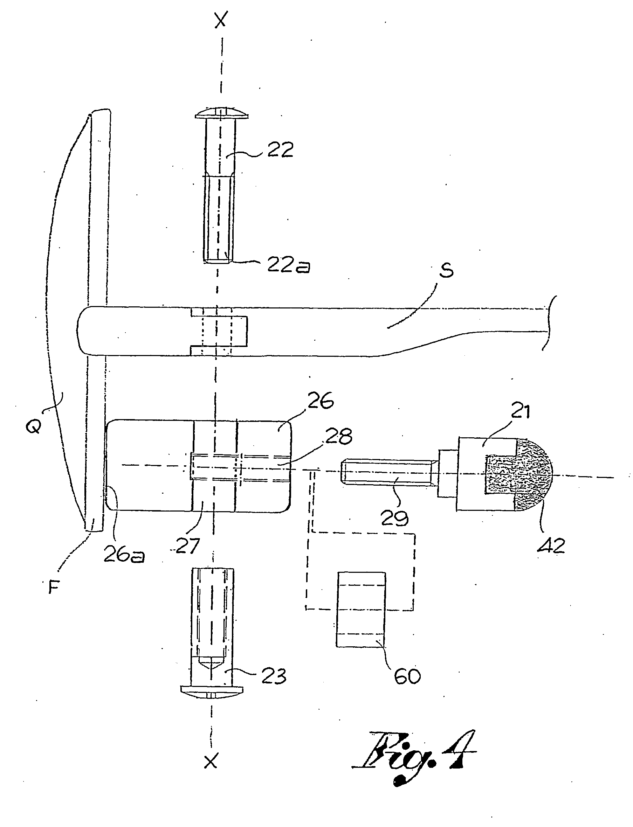

In accordance with a second embodiment shown in Figure 4, the coupling element 21 is arranged so as to orthogonally protrude relative to the threaded rod 22 in a direction opposite that of glasses Q of the spectacles. When the temples are in opened position, the coupling element 21 is substantially parallel thereto; on the other hand, when they are in closed position, the coupling element is substantially orthogonal thereto.

This second embodiment is alternative to the first embodiment and is adopted for all those frames wherein between temple S and front F there is no sufficient space for inserting the coupling element 21 coaxially to the threaded rod 22. In this second embodiment, the coupling element 21, by protruding orthogonally relative to glasses Q and to the temples in closed position can still contact the supporting means 10 and, once attached to the magnetic element 11, it can still hold the spectacles arranging the temples in contact with the clothes and glasses Q facing outwards and parallel to the user's body, or in the minimal projection position.

More in detail, in this second embodiment, the holding means 20 comprise a spacer element 26 that is inserted in the threaded rod 22 coaxially to bush 23. Such element 26 has the function of mechanically supporting the coupling element 21 keeping it spaced from front F of spectacles A.

The spacer element 26 is provided with a through hole 27 suitable for receiving bush 23 therein.

Advantageously, the spacer element 26 consists of a piece of material without ferromagnetic properties, that is, not sensitive to the magnetic field, for example aluminium.

Advantageously, the spacer element 26 is provided with a substantially plane face 26a which is arranged in contact with front F of spectacles A in order to prevent the rotation of the spacer element 26 relative to bush 23 and to the rotation axis X.

The spacer element 26 is further provided with a seat 28 that develops according to a direction substantially orthogonal to the through hole 27 and relative to the plane face 26a and is suitable for receiving the coupling element 21. In this way, when the spacer element 26 is fitted on the spectacles, seat 28 is substantially orthogonal relative to front F and to the temples in closed position.

Preferably, the above seat 28 is a threaded hole. To this end, the coupling element 21 is provided with a counter-threaded appendix 29 suitable for screwing inside the threaded holed 28.

As can be seen in Figure 4, also in this case the coupling element 21 can bed provided with a cover 42 of plastic or rubber material, in particular shaped as a plug, to prevent direct contact with the clothes.

Advantageously, the holding means 20 comprise a hollow tubular body 60 that can be inserted between the spacer element 26 and the coupling element 21, coaxially to the counter threaded appendix 29, for further moving the coupling element 21 away from front F in the temple movement zone.

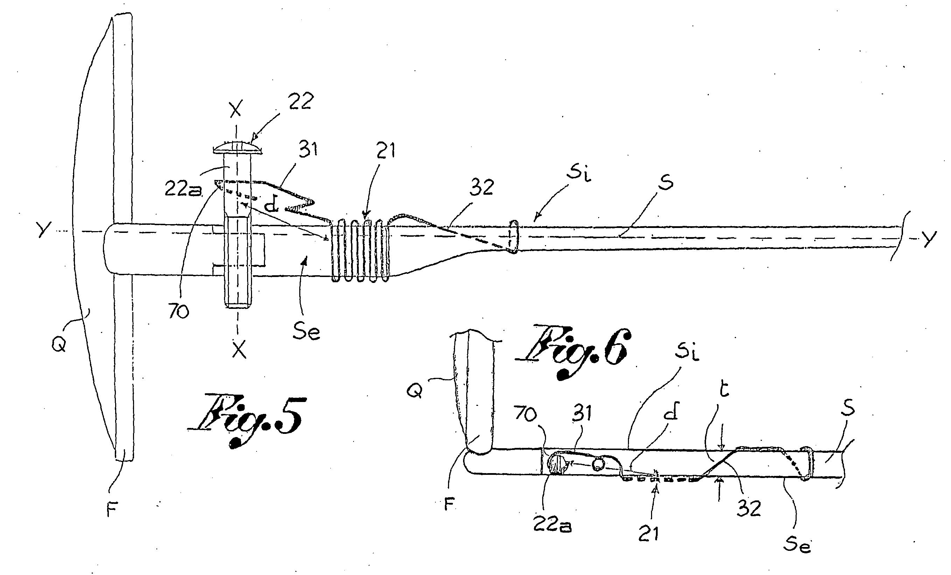

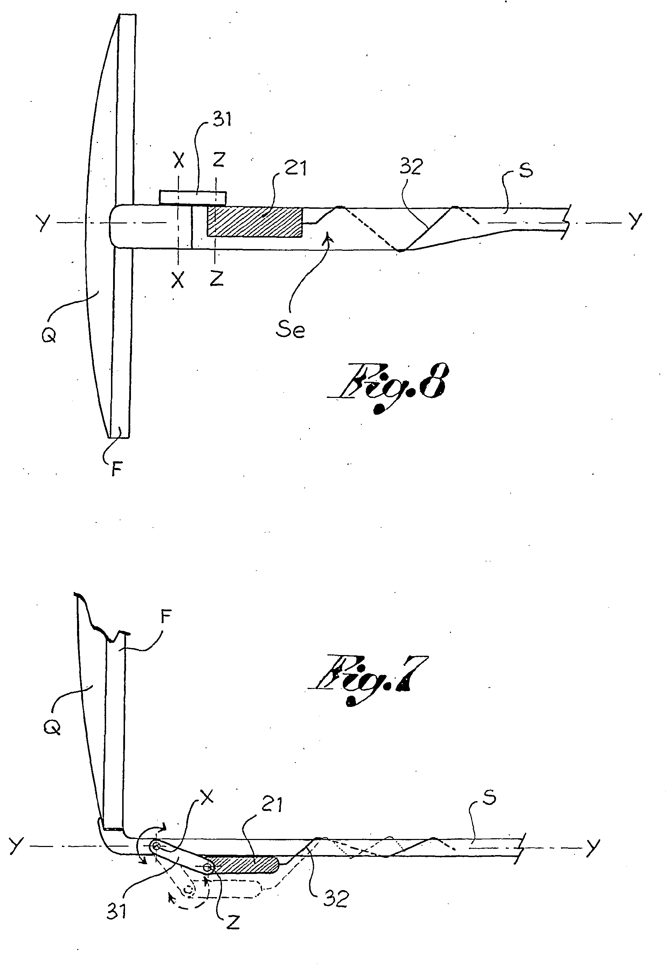

In accordance with a third and fourth embodiment respectively shown in Figures 5 and 6 and in Figures 7 and 8, the coupling element 21 is arranged in contact with the outer surface Se of a temple S, parallel to the longitudinal development direction Y of the latter.

To this end, the coupling element 21 consists of an elongated and thin body, such as a plate, or of a metal wire with multiple folds for arranging on a single plane, as shown in Figure 5 and 7.

In these latter embodiments, the holding means 20 comprise a first and a second arm 31 and 32 which are mechanically attached to the coupling element 21 in distal positions and are suitable for respectively connecting to the end portion 22a of the threaded rod 22 and to temple S.

In accordance with the third embodiment shown in Figures 5 and 6, the two arms 31 and 32 are provided with higher elasticity as compared to the body that forms the coupling element 21 and allow constraining the latter to the threaded rod 22 and to temple S, adjusting to the shape of the latter.

More in detail, the first arm 31 is intended for being connected to the end portion 22a of the threaded rod 22, whereas the second arm 31 is intended for being slidingly connected to temple S.

Operatively, the first arm 31 may be elastically deformed, extending or shortening between the threaded rod 22 and the coupling element 21, for adjusting to the different cross thicknesses "t" of temples S and to the different distances "d" existing between the threaded rod 22 and the zone of temple S wherein the coupling element 21 is made to adhere. The elastic deformation of the first arm 31 is followed by the movement of the second arm 32 which can slide longitudinally along temple S. In this way, on any kind of spectacles, it is always possible to make the coupling element 21 adhere to the outer surface Se of temple S.

Figures 5 and 6 show a particular example of this third embodiment. The holding means 20 and the coupling element 21 consist of a single piece of metal wire suitably shaped. Centrally, the metal wire is folded on itself, arranged in a single extension plane, for forming the coupling element 21. The two end portions of the wire form the two arms 31 and 32. In particular, the first arm 31 is shaped in an intermediate point thereof as a spiral for increasing its elastic properties and ends with a hook 70 to connect to the threaded rod 22. The second arm 32 is provided with an end element shaped as a U suitable for slidingly receiving temple S therein.

Operatively, the second arm 32 is arranged in contact with the inner surface Si of temple S for keeping the central portion of the wire (which forms the coupling element 21) as adhering as possible to the outer surface Se of temple S.

In accordance with the fourth embodiment, the first arm 31 is an indeformable element pivoted at the two ends thereof respectively to the threaded rod 22 and at the coupling element 21 like a connecting rod, whereas the second arm 32 is provided with higher elasticity as compared to the body forming the coupling element 21.

In particular, the latter consists of an elongated metal body, preferably with a laminar shape or in any case having a prevailing longitudinal development direction.

The second arm 32 consists of a metal wire welded to the coupling element 21 at an end and suitably shaped for the remainder of its development to wind about the temple.

Advantageously, as shown in Figure 8, the first arm 31 is pivoted on the frame at the threaded rod 22 for rotating about axis X and is pivoted on the coupling element 21 by a pin for rotating about an axis Z parallel to axis X.

Functionally, the coupling element 21, by rotating about the rotation axis X and axis Z, allows the coupling element 21 to move away and/or close parallel to the outer surface Se of the temple.

Similarly to what envisaged in the third embodiment, also in this fourth embodiment the second arm 32 is susceptible of longitudinally sliding relative to temple S so as to follow the movement of the first arm 31 and thus allow the coupling element 21 to adhere to the outer surface Se adjusting to the thickness of the temple itself.

In this accompanying movement, the second arm 32 can elastically deform at least at the end portion connected to the coupling element 21.

Advantageously, as can be seen in Figure 2, in all the embodiments of this spectacles holder device 1, the magnetic element 11 can be provided with a hook or an eyelet 50. The latter is intended for supporting the end of a string 51 to be attached to a temple S of the pair of spectacles A.

Functionally, when the spectacles are detached from the supporting means 10, string 51 opens temple S thus aiding the user when he/she is about to wear the spectacles.

To make use of this device, preferably the magnetic element 11 must not be covered by any clothes.

If on the other hand it is preferred to keep the magnetic element 11 covered, string 51 can be made to protrude from the garment's collar or from any other opening optionally present.

Advantageously, all the metal parts of the spectacles holder device 1 can be coated with films made of an anallergic material.

A first advantage of device 1 according to the invention is to be easily applied to the clothes.

Unlike what envisaged in the prior art device described above, the device according to the invention comprises supporting means that can be associated to a hem of a garment in a very quick, practical and immediate manner. In fact, no pins, seams or Velcro strips are used since the magnetic interaction between two elements is used, of which at least one is susceptible of generating a magnetic field and the other is sensitive to the magnetic field itself.

A second advantage of the device according to the invention is given by the possibility of being applied to any type of frame without having to envisage difficult modifications of the same

A third advantage arises from the fact that the arrangement of the coupling element relative to the frame is such that the magnetic fore generated between such coupling element and the supporting means orientates the spectacles arranging them with the temples in contact with the clothes and the glasses facing outwards. This prevents the glasses from rubbing against the clothes and thus being ruined.

A further object of the present invention is an assembly for holding in a separable manner a pair of spectacles on the clothes of a user, as well as a method for hanging a pair of spectacles on a garment.

The above assembly comprises a garment to wear that defines at least one hem L, as well as supporting means 10 and holding means 20 of device 1 described hereinbefore.

In particular, the above supporting means 10 comprise the magnetic element 11 and the fixing element 12, which are susceptible of attracting each other by magnetic interaction. Such supporting means 10 engage on the clothes by interposing the above hem L between the magnetic element 11 and the fixing element 12.

The holding means 20 are intended for being mechanically associated to the pair of spectacles A and are removably connected to supporting means 10 by magnetic interaction with said magnetic element 11 in order to hold the pair of spectacles A on the supporting means 10 and thus on the clothes.

Preferably, the holding means 20 are mechanically connected to the pair of spectacles at the rotation axis X of one of temples S of the pair of spectacles A.

Such holding means 20 comprise a threaded rod 22 for connecting temple S to front F along the rotation axis X, which is provided with a protruding end portion 22a, and at least one coupling element 21, made of a magnetic or ferromagnetic material.

Such coupling element 21 is susceptible of magnetically connecting to the magnetic element 11 of the supporting means 10 and is suitable for being mechanically connected to the threaded rod 22 at the end portion 22a.

In particular, the coupling element 21 is arranged in line with the rotation axis X or, with reference to the temples in opened position, it is arranged between the rotation axis X and the free end of the temple.

In this way, when the coupling element 21 is moved in contact with the magnetic element 11 with the temples folded on front F in closed position, the magnetic interaction between the magnetic element 11 and the coupling element 21 orientates the temples towards the clothes, thus preventing the spectacles supported by front F from contacting the clothes themselves.

The method for hanging a pair of spectacles A to a garment comprises the following steps:

- providing a device or an assembly as described hereinbefore according to any one of the embodiments thereof;

- arranging a garment provided with at least one hem

- interposing the hem L between the magnetic element 11 and the fixing element 12 so that these two elements, attracting by magnetic interaction, hold each other on hem L;

- associating the holding means 20 to the pair of spectacles A; and

- magnetically connecting the holding means 20 to the supporting means 10, thus holding the pair of spectacles A on the clothes.

The invention thus conceived thus achieves the intended purposes.

Of course, in the practical embodiment thereof, it may take shapes and configurations differing from that illustrated above without departing from the present scope of protection.

Moreover, all the parts may be replaced by technically equivalent ones and the sizes, shapes and materials used may be whatever according to the requirements.

## Claims

1. A spectacles holder device intended for holding in a separable manner a pair of spectacles (A) on the clothes of a user, comprising:
- supporting means (10), intended for being associated to said clothes and comprising a magnetic element (11); and
- holding means (20), which are intended for being mechanically associated to said pair of spectacles (A) and are removably connectable to said supporting means (10) by magnetic interaction with said magnetic element (11) in order to hold said pair of spectacles (A) on said supporting means (10) and thus on said clothes;
**characterised in that** said holding means (20) are mechanically connected to said pair of spectacles at the rotation axis (X) of one of the temples (S) of said pair of spectacles (A) relative to the front (F) and comprise:
- a threaded rod (22) provided with a protruding end portion (22a) and suitable for connecting said temple (S) to said front (F) along said rotation axis (X) ; and
- at least one coupling element (21), made of a magnetic or ferromagnetic material or sensitive to the magnetic field, which is susceptible of magnetically connecting to the magnetic element (11) of said supporting means (10) and is suitable for being mechanically connected to said threaded rod (22) at said end portion (22a);
said coupling element (21) being arranged in line with said rotation axis (X) or, with reference to the temples in opened position, being arranged between said rotation axis (X) and the free end of said temple, so that when said coupling element (21) is moved in contact with said magnetic element (11) with the temples of said pair of spectacles (A) folded on said front (F) in closed position, the magnetic interaction between said magnetic element (11) and said coupling element (21) orientates said temples towards said clothes, thus preventing the glasses supported by said front (F) from contacting the clothes themselves.

2. A spectacles holder device according to claim 1, wherein said supporting means (10) comprise a fixing element (12), made of a magnetic or ferromagnetic material, said magnetic element (11) and said fixing element (12) being susceptible of attracting each other by magnetic interaction, said supporting means (10) engaging on said clothes by interposition of at least one hem (L) of said clothes between said magnetic element (11) and said fixing element (12).

3. A spectacles holder device according to claim 1 or 2, wherein said holding means (20) comprise a bush (23), suitable for connecting to said threaded rod (22) at said end portion (22a) and intended for supporting said coupling element (21).

4. A spectacles holder device according to claim 3, wherein said coupling element (21) is provided with a through hole (25) for receiving said bush (23) therein and thus freely rotate about said rotation axis (X).

5. A spectacles holder device according to claim 4, wherein said coupling element (21) has a symmetrical development relative to said through hole (25).

6. A spectacles holder device according to claim 5, wherein said coupling element (21) has an ovoid or disc shape.

7. A spectacles holder device according to claim 1, 2 or 3, wherein said holding means (20) comprise:
- a bush (23) suitable for connecting on said threaded rod (22) at said end portion (22a); and
- a spacer element (26), which is provided with a through hole (27) for connecting to said bush (23) and is suitable for supporting said coupling element (21) keeping it spaced from the front (F) of said pair of spectacles (A).

8. A spectacles holder device according to claim 7, wherein said spacer element (26) is provided with a flat face (26a) which is intended for being arranged in contact with said front (F) for preventing the rotation of said spacer element (26) relative to said bush (23), and with a seat (28) that develops in a direction substantially orthogonal relative to said through hole (27) and to said flat face (26a) and is suitable for receiving said coupling element (21) therein.

9. A spectacles holder device according to claim 8, wherein said seat (28) consists of a threaded hole and wherein said coupling element (21) is provided with a counter-threaded appendix (29) suitable for inserting into said seat (28) for connecting said coupling element (21) to said spacer element (26).

10. A spectacles holder device according to claim 1 or 2, wherein said coupling element (21) is an elongated and thin body, suitable for adhering to the outer surface (Se) of said temple (S) parallel to the longitudinal development direction (Y) of the latter, and wherein said holding means (20) comprise a first (31) and a second arm (32), which are secured to said coupling element (21) in distal positions and are suitable for respectively connecting to the end portion (22a) of said threaded rod (22) and to said temple (S).

11. A spectacles holder device according to claim 10, wherein said two arms (31; 32) are provided with higher elasticity as compared to said coupling element (21), said first arm (31) being capable of elastically extending between said threaded rod (22) and said coupling element (21) and said second arm (31) being capable of longitudinally sliding relative to said temple (S) for allowing said coupling element (21) to adhere to said outer surface (Se) in any type of temple (S).

12. A spectacles holder device according to claim 11, wherein said first (31) and said second arm (32) consist of thread-like elements shaped so as to have shape elasticity.

13. A spectacles holder device according to claim 10, wherein said second arm (32) is provided with higher elasticity as compared to said coupling element (21) for longitudinally sliding relative to said temple (S) and thus allow said coupling element (21) to adhere to said outer surface (Se) in any type of temple (S), and wherein said first arm (31) is an indeformable element pivoted at the two ends thereof respectively to said threaded rod (22) and to said coupling element (21) like a connecting rod and is suitable for keeping the latter adhering to said surface (Se) as said second arm (32) slides.

14. A spectacles holder device according to claim 1 or 2, wherein said coupling element (21) is provided with a threaded hole (25) for connecting to said threaded rod (22) aligned along said rotation axis (X).

15. A spectacles holder device according to any one of the previous claims, wherein said magnetic element (11) is provided with a hook (50) intended for supporting the end of a string (51), said string (51) being attached to a temple (S) of said pair of spectacles (A) in order to open said temple (S) when said coupling element (21) is separated from said magnetic element (11) thus aiding the user in putting on said pair of spectacles (A).

16. A spectacles holder device according to any one of the previous claims, wherein said magnetic element (11), said fixing element (12) and said coupling element (21) are at least partly covered with plastic or rubber material so as not to cause creases on said clothes.

17. An assembly for holding in a separable manner a pair of spectacles (A) on the clothes of a user, comprising:
- a garment to wear that defines at least one hem (L) ;
- supporting means (10) according to any one of the previous claims, comprising a magnetic element (11) and a fixing element (12), made of a magnetic or ferromagnetic material, said magnetic element (11) and said fixing element (12) being susceptible of attracting each other by magnetic interaction, said supporting means (10) engaging on said clothes by interposition of at least said hem (L) between said magnetic element (11) and said fixing element (12); and
- holding means (20) according to any one of the previous claims, which are intended for being mechanically associated to said pair of spectacles (A) and are removably connectable to said supporting means (10) by magnetic interaction with said magnetic element (11) in order to hold said pair of spectacles (A) on said supporting means (10) and thus on said clothes.

18. An assembly for holding in a separable manner a pair of spectacles (A) on the clothes of a user, comprising:
- a garment to wear that defines at least one hem (L);
- supporting means (10), comprising a magnetic element (11) and a fixing element (12), made of a magnetic or ferromagnetic material, said magnetic element (11) and said fixing element (12) being susceptible of attracting each other by magnetic interaction, said supporting means (10) engaging on said clothes by interposition of at least said hem (L) between said magnetic-element (11) and said fixing element (12); and
- holding means (20), which are intended for being mechanically associated to said pair of spectacles (A) and are removably connectable to said supporting means (10) by magnetic interaction with said magnetic element (11) in order to hold said pair of spectacles (A) on said supporting means (10) and thus on said clothes, said holding means (20) being mechanically connected to said pair of spectacles at the rotation axis (X) of one of the temples (S) of said pair of spectacles (A) relative to the front (F), said means (20) comprising:
- a threaded rod (22) for connecting said temple (S) to said front (F) along a rotation axis (X), provided with a protruding end portion (22a) ; and
- at least one coupling element (21), made of a magnetic or ferromagnetic material, which is susceptible of magnetically connecting to the magnetic element (11) of said supporting means (10) and is suitable for being mechanically connected to said threaded rod (22) at said end portion (22a) ;
said coupling element (21) being arranged in line with said rotation axis (X) or, with reference to the temples in opened position, being arranged between said rotation axis (X) and the free end of said temple, so that when said coupling element (21) is moved in contact with said magnetic element (11) with the temples of said pair of spectacles (A) folded on said front (F) in closed position, the magnetic interaction between said magnetic element (11) and said coupling element (21) orientates said temples towards said clothes, thus preventing the glasses supported by said front (F) from contacting the clothes themselves.

19. A method for hanging a pair of spectacles (A) to a garment, comprising the following steps:
- providing a device or an assembly according to any one of the previous claims;
- arranging a garment provided with at least one hem (L) ;
- interposing said hem (L) between said magnetic element (11) and said fixing element (12) so that said two last elements, attracting by magnetic interaction, hold each other on said hem;
- associating said holding means (20) to said pair of spectacles (A);
- magnetically connecting said holding means (20) to said supporting means (10), thus holding said pair of spectacles (A) on said clothes.

## Patentansprüche

1. Brillenhaltevorrichtung zum Halten einer Brille (A) an der Kleidung eines Benutzers in einer lösbaren Weise umfassend
- Tragmittel (10), die zur Verbindung mit der Kleidung gedacht sind und ein Magnetelement (11) umfassen, und
- Haltemittel (20), die zur mechanischen Verbindung mit der Brille (A) gedacht sind und mit den Tragmitteln (10) durch Magnetwirkung mit dem Magnetelement (11) lösbar verbindbar sind, um die Brille (A) an den Tragmitteln (10) und daher an der Kleidung zu halten,
**dadurch gekennzeichnet, dass** die Haltemittel (20) mit der Brille an der Drehachse (X) eines Bügels (S) der Brille (A) bezüglich der Vorderseite (F) mechanisch verbunden sind und folgendes umfassen:
- eine Gewindestange (22), die mit einem vorstehenden Endabschnitt (22a) versehen ist und zur Verbindung des Bügels (S) mit der Vorderseite (F) entlang der Drehachse (X) geeignet ist, und
- wenigstens ein Verbindungselement (21), das aus einem magnetischen oder ferromagnetischen Werkstoff oder einem Werkstoff, der auf das magnetische Feld reagiert, hergestellt ist, welches magnetisierbar ist, um mit dem Magnetelement (11) der Tragmittel (10) magnetisch verbunden zu werden und welches zur mechanischen Verbindung mit der Gewindestange (22) an dem Endabschnitt (22a) geeignet ist,
wobei das Verbindungselement (21) in einer Linie mit der Drehachse (X) oder bezüglich der sich in der offenen Position befindenden Bügel so zwischen der Drehachse (X) und dem freien Ende des Bügels angeordnet ist, dass, wenn das Verbindungselement (21) bei an der Vorderseite (F) in eine geschlossene Position gefalteten Bügeln der Brille (A) mit dem Magnetelement in Kontakt gebracht wird, die magnetische Wechselwirkung zwischen dem Magnetelement (11) und dem Verbindungselement (21) die Bügel zu der Kleidung ausrichtet, wodurch verhindert wird, dass die Gläser, die durch die Vorderseite (F) gehalten werden, selbst die Kleidung kontaktieren.

2. Brillenhaltevorrichtung nach Anspruch 1, wobei die Tragmittel (10) ein Befestigungselement (12) umfassen, das aus einem magnetischen oder ferromagnetischen Werkstoff hergestellt ist, wobei das Magnetelement (11) und das Befestigungselement (12) so magnetisierbar sind, dass sie sich durch die magnetische Wechselwirkung anziehen, wobei die Tragmittel (10) an der Kleidung durch Zwischenschaltung wenigstens eines Saums (L) der Kleidung zwischen dem Magnetelement (11) und dem Befestigungselement (12) angreifen.

3. Brillenhaltevorrichtung nach Anspruch 1 oder 2, wobei die Haltemittel (20) eine Hülse (23) umfassen, die zum Verbinden mit der Gewindestange (22) an dem Endabschnitt (22a) geeignet ist und zur Abstützung des Verbindungselements (21) gedacht ist.

4. Brillenhaltevorrichtung nach Anspruch 3, wobei das Verbindungselement (21) mit einer Durchgangsbohrung (25) zur Aufnahme der Hülse (23) in dieser versehen ist und daher frei um die Drehachse (X) drehen kann.

5. Brillenhaltevorrichtung nach Anspruch 4, wobei das Verbindungselement (21) einen symmetrischen Aufbau bezüglich der Durchgangsbohrung (25) aufweist.

6. Brillenhaltevorrichtung nach Anspruch 5, wobei das Verbindungselement (21) eine eiförmige oder scheibenförmige Gestalt aufweist.

7. Brillenhaltevorrichtung nach Anspruch 1, 2 oder 3, wobei die Haltemittel (20) folgendes umfassen
- eine Hülse (23), die zum Verbinden mit der Gewindestange (22) an dem Endabschnitt (22a) geeignet ist, und
- ein Abstandselement (26), das mit einer Durchgangsbohrung (27) zur Verbindung mit der Hülse (23) versehen ist und zum Abstützen des Verbindungselements (21) geeignet ist, so dass dieses zu der Vorderseite (F) der Brille (A) mit Abstand gehalten ist.

8. Brillenhaltevorrichtung nach Anspruch 7, wobei das Abstandselement (26) mit einer ebenen Fläche (26a), die dazu bestimmt ist, mit der Vorderseite (F) in Kontakt zu sein, um ein Drehen des Abstandselements (26) relativ zu der Hülse (23) zu verhindern, und mit einem Sitz (28) versehen ist, der sich in einer Richtung im Wesentlichen rechtwinklig zur Durchgangsbohrung (27) und zu der ebenen Fläche (26a) erstreckt und zur Aufnahme des Verbindungselements (21) in diesem gedacht ist.

9. Brillenhaltevorrichtung nach Anspruch 8, wobei der Sitz (28) aus einer Gewindebohrung besteht und wobei das Verbindungselement (21) mit einer gegenläufigen Gewindeverlängerung (29) versehen ist, die zum Einführen in den Sitz (28) zum Verbinden des Verbindungselements (21) mit dem Abstandselement (26) geeignet ist.

10. Brillenhaltevorrichtung nach Anspruch 1 oder 2, wobei das Verbindungselement (21) ein länglicher und dünner Körper ist, der zum Anhaften an der Außenfläche (Se) des Bügels (S) parallel zu der Längserstreckungsrichtung (Y) des Bügels geeignet ist, und wobei die Haltemittel (20) einen ersten Arm (31) und einen zweiten Arm (32) umfassen, die an dem Verbindungselement (21) in distalen Positionen festgelegt sind und zum jeweiligen Verbinden mit dem Endabschnitt (22a) der Gewindestange (22) und dem Bügel (S) geeignet sind.

11. Brillenhaltevorrichtung nach Anspruch 10, wobei die zwei Arme (31; 32) mit einer größeren Elastizität als das Verbindungselement (21) versehen sind, wobei der erste Arm (31) im Stande ist, sich elastisch zwischen der Gewindestange (22) und dem Verbindungselement (21) zu erstrecken und wobei der zweite Arm (31) im Stande ist, dass er bezüglich des Bügels (S) längs gleiten kann, um zu ermöglichen, dass das Verbindungselement (21) an der Außenfläche (Se) bei jeglicher Art von Bügeln (S) haftet.

12. Brillenhaltevorrichtung nach Anspruch 11, wobei der erste Arm (31) und der zweite Arm (32) aus gewindeartigen Elementen bestehen, die derart geformt sind, dass sie Gestaltelastizität aufweisen.

13. Brillenhaltevorrichtung nach Anspruch 10, wobei der zweite Arm (32) mit einer größeren Elastizität als das Verbindungselement (21) für das Längsgleiten bezüglich des Bügels (S) versehen ist, und wodurch ermöglicht wird, dass das Verbindungselement (21) an der Außenfläche (Se) jeglicher Art von Bügeln (S) haftet, und wobei der erste Arm (31) ein unverformbares Element ist, das an seinen beiden Enden bezüglich der Gewindestange (22) und zu dem Verbindungselement (21), wie eine Verbindungsstange, gedreht wird und dazu geeignet ist, das Verbindungselement (21) an der Fläche (Se) haftend zu halten, während der zweite Arm (32) gleitet.

14. Brillenhaltevorrichtung nach Anspruch 1 oder 2, wobei das Verbindungselement (21) mit einer entlang der Drehachse (X) ausgerichteten Gewindebohrung (25) zum Verbinden mit der Gewindestange (22) versehen ist.

15. Brillenhaltevorrichtung nach einem der vorangehenden Ansprüche, wobei das Magnetelement (11) mit einem Haken (50) versehen ist, der zum Halten des Endes einer Schnur (51) gedacht ist, wobei die Schnur (51) an einem Bügel (S) der Brille (A) befestigt ist, um den Bügel (S) zu öffnen, wenn das Verbindungselement (21) von dem Magnetelement (11) getrennt wird, wodurch der Benutzer beim Aufsetzen der Brille (A) unterstützt wird.

16. Brillenhaltevorrichtung nach einem der vorangehenden Ansprüche, wobei das Magnetelement (11), das Befestigungselement (12) und das Verbindungselement (21) wenigstens teilweise mit einem Kunststoff- oder Gummiwerkstoff derart bedeckt sind, dass sie keine Falten an der Kleidung hervorrufen.

17. Baugruppe zum trennbaren Halten einer Brille (A) an der Kleidung eines Benutzers umfassend
- ein zu tragendes Kleidungsstück, das wenigstens einen Saum (L) bildet,
- Tragmittel (10) nach irgend einem der vorangehenden Ansprüche, umfassend ein Magnetelement (11) und ein Befestigungselement (12), die aus einem magnetischen oder ferromagnetischen Werkstoff hergestellt sind, wobei das Magnetelement (11) und das Befestigungselement (12) so magnetisierbar sind, dass sie sich aufgrund der magnetischen Wechselwirkung anziehen, und wobei die Tragmittel (10) durch Zwischenschaltung wenigstens des Saums (L) zwischen dem Magnetelement (11) und dem Befestigungselement (12) an der Kleidung angreifen, und
- Haltemittel (20) nach irgend einem der vorangehenden Ansprüche, die zur mechanischen Verbindung mit der Brille (A) gedacht sind und mit den Tragmitteln (10) durch die magnetische Wechselwirkung mit dem Magnetelement (11) lösbar verbindbar sind, um die Brille (A) an den Tragmitteln (10) und daher an der Kleidung zu halten.

18. Baugruppe zum lösbaren Halten einer Brille (A) an der Kleidung eines Benutzers umfassend
- ein zu tragendes Kleidungsstück, das wenigstens einen Saum (L) bildet,
- Tragmittel (10), die ein Magnetelement (11) und ein Befestigungselement (12), die aus einem magnetischen oder ferromagnetischen Werkstoff hergestellt sind, umfassen, wobei das Magnetelement (11) und das Befestigungselement (12) so magnetisierbar sind, dass sie sich aufgrund der magnetischen Wechselwirkung anziehen und wobei die Tragmittel (10) durch Zwischenschaltung wenigstens des Saums (L) zwischen dem Magnetelement (11) und dem Befestigungselement (12) an der Kleidung angreifen, und
- Haltemittel (20), die zur mechanischen Verbindung mit der Brille (A) gedacht sind und mit den Tragmitteln (10) durch die magnetische Wechselwirkung mit dem Magnetelement (11) lösbar verbindbar sind, um die Brille (A) an den Tragmitteln (10) und daher an der Kleidung zu halten,
wobei die Haltemittel (20) mit der Brille an der Drehachse (X) einer der beiden Bügel (S) der Brille (A) relativ zu der Vorderseite (F) mechanisch verbunden sind,
wobei die Mittel (20) folgendes umfassen:
- eine Gewindestange (22) zum Verbinden des Bügels (S) mit der Vorderseite (F) entlang einer Drehachse (X), die mit einem vorstehenden Endabschnitt (22a) versehen ist, und
- wenigstens ein Verbindungselement (21), das aus einem magnetischen oder ferromagnetischen Werkstoff hergestellt ist, das so magnetisierbar ist, dass es mit dem Magnetelement (11) der Tragmittel (10) magnetisch verbindbar ist und das zur mechanischen Verbindung der Gewindestange (22) mit dem Endabschnitt (22a) geeignet ist,
wobei das Verbindungselement (21) in einer Linie mit der Drehachse (X) oder bezüglich der sich in einer offenen Position befindenden Bügel so zwischen der Drehachse (X) und dem freien Ende des Bügels derart angeordnet ist, dass, wenn das Verbindungselement (21) bei an die Vorderseite (F) in eine geschlossene Position gefaltenen Bügeln der Brille (A) mit dem Magnetelement (11) in Kontakt gebracht wird, die magnetische Wechselwirkung zwischen dem Magnetelement (11) und dem Verbindungselement (21) die Bügel zu der Kleidung ausrichtet, wodurch verhindert wird, dass die Gläser, die durch die Vorderseite (F) gehalten werden, selbst die Kleidung kontaktieren.

19. Verfahren zum Anhängen einer Brille (A) an ein Kleidungsstück die folgenden Schritte umfassend
- Bereitstellen einer Vorrichtung oder einer Baugruppe nach einem der vorangehenden Ansprüche,
- Vorsehen eines Kleidungsstücks, das mit wenigstens einem Saum (L) versehen ist,
- Anordnen des Saums (L) zwischen dem Magnetelement (11) und dem Befestigungselement (12) derart, dass die beiden letztgenannten Elemente, die sich durch die magnetische Wechselwirkung anziehen, sich gegenseitig an dem Saum (L) festhalten,
- Verbinden der Haltemittel (20) mit der Brille (A),
- magnetisches Verbinden der Haltemittel (20) mit den Tragmitteln (10), wodurch die Brille (A) an der Kleidung gehalten wird.

## Revendications

1. Dispositif porte-lunettes pour retenir, d'une manière séparable, une paire de lunettes (A) sur les vêtements d'un utilisateur, comprenant :
- des moyens de support (10), destinés à être associés auxdits vêtements et comprenant un élément magnétique (11) ; et
- des moyens de retenue (20), qui sont destinés à être mécaniquement associés à ladite paire de lunettes (A) et peuvent être reliés de manière amovible auxdits moyens de support (10) par interaction magnétique avec ledit élément magnétique (11) de façon à retenir ladite paire de lunettes (A) sur lesdits moyens de support (10) et ainsi sur lesdits vêtements ;
**caractérisé en ce que** lesdits moyens de retenue (20) sont mécaniquement reliés à ladite paire de lunettes au niveau de l'axe de rotation (X) de l'une des branches (S) de ladite paire de lunettes (A) par rapport à la face (F) et comprend :
- une tige filetée (22) munie d'une partie d'extrémité saillante (22a) et adaptée pour relier ladite branche (S) à ladite face (F) le long dudit axe de rotation (X) ; et
- au moins un élément de couplage (21), réalisé en une matière magnétique ou ferromagnétique ou sensible au champ magnétique, qui est susceptible d'être relié magnétiquement à l'élément magnétique (11) desdits moyens de support (10) et est susceptible d'être relié mécaniquement à ladite tige filetée (22) au niveau de ladite partie d'extrémité (22a) ;
ledit élément de couplage (21) étant agencé en ligne avec ledit axe de rotation (X) ou, en référence aux branches en position ouverte, étant agencé entre ledit axe de rotation (X) et l'extrémité libre de ladite branche, de sorte que, quand ledit élément de couplage (21) est déplacé en contact avec ledit élément magnétique (11) avec les branches de ladite paire de lunettes (A) pliées sur ladite face (F) en position fermée, l'interaction magnétique entre ledit élément magnétique (11) et ledit élément de couplage (21) oriente lesdites branches vers lesdits vêtements, en évitant ainsi le contact des verres supportés par ladite face (F) avec les vêtements eux-mêmes.

2. Dispositif porte-lunettes selon la revendication 1, dans lequel lesdits moyens de support (10) comprennent un élément de fixation (12) réalisé en une matière magnétique ou ferromagnétique, ledit élément magnétique (11) et ledit élément de fixation (12) étant susceptibles de s'attirer l'un l'autre par interaction magnétique, lesdits moyens de support (10) s'engageant sur lesdits vêtements par interposition d'au moins un bord (L) desdits vêtements entre ledit élément magnétique (11) et ledit élément de fixation (12).

3. Dispositif porte-lunettes selon la revendication 1 ou 2, dans lequel lesdits moyens de retenue (20) comprennent une bague (23) susceptible d'être reliée à ladite tige filetée (22) au niveau de ladite partie d'extrémité (22a) et destinée à supporter ledit élément de couplage (21).

4. Dispositif porte-lunettes selon la revendication 3, dans lequel ledit élément de couplage (21) est muni d'un trou traversant (25) pour recevoir ladite bague (23) dans celui-ci et tourner ainsi librement autour dudit axe de rotation (X) .

5. Dispositif porte-lunettes selon la revendication 4, dans lequel ledit élément de couplage (21) a un développement symétrique par rapport audit trou traversant (25).

6. Dispositif porte-lunettes selon la revendication 5, dans lequel ledit élément de couplage (21) a une forme ovoïde ou de disque.

7. Dispositif porte-lunettes selon la revendication 1, 2 ou 3, dans lequel lesdits moyens de retenue (20) comprennent :
- une bague (23) susceptible d'être reliée sur ladite tige filetée (22) au niveau de ladite partie d'extrémité (22a) ; et
- un élément d'écartement (26), qui est muni d'un trou traversant (27) pour la liaison à ladite bague (23) et est susceptible de supporter ledit élément de couplage (21) en le maintenant espacé de la face (F) de ladite paire de lunettes (A).

8. Dispositif porte-lunettes selon la revendication 7, dans lequel ledit élément d'écartement (26) est muni d'une face plate (26a) qui est destinée à être agencée en contact avec ladite face (F) pour empêcher la rotation dudit élément d'écartement (26) par rapport à ladite bague (23) et d'un logement (28) qui s'étend dans une direction sensiblement orthogonale par rapport audit trou traversant (27) et à ladite face plate (26a) et est susceptible de recevoir ledit élément de couplage (21) dans celui-ci.

9. Dispositif porte-lunettes selon la revendication 8, dans lequel ledit logement (28) se compose d'un trou taraudé et dans lequel ledit élément de couplage (21) est muni d'un appendice à filetage opposé (29) susceptible d'être inséré dans ledit logement (28) pour relier ledit élément de couplage (21) audit élément d'écartement (26).

10. Dispositif porte-lunettes selon la revendication 1 ou 2, dans lequel ledit élément de couplage (21) est un corps allongé et mince, susceptible d'adhérer à la surface externe (Se) de ladite branche (S), parallèlement à la direction de développement longitudinale (Y) de celle-ci,et dans lequel lesdits moyens de retenue (20) comprennent un premier bras (31) et un second bras (32), qui sont immobilisés sur ledit élément de couplage (21) dans des positions distales et sont susceptibles d'être reliés, respectivement, à la partie d'extrémité (22a) de ladite tige filetée (22) et à ladite branche (S).

11. Dispositif porte-lunettes selon la revendication 10, dans lequel lesdits deux bras (31, 32), sont prévus avec une élasticité supérieure comparativement audit élément de couplage (21), ledit premier bras (31) étant capable de s'étendre élastiquement entre ladite tige filetée (22) et ledit élément de couplage (21), et ledit second bras (31) étant capable de coulisser longitudinalement par rapport à ladite branche (S) pour permettre audit élément de couplage (21) d'adhérer à ladite surface externe (Se) selon un quelconque type de branche (S).

12. Dispositif porte-lunettes selon la revendication 11, dans lequel lesdits premier (31) et second (32) bras se composent d'éléments filiformes façonnés pour avoir une élasticité.

13. Dispositif porte-lunettes selon la revendication 10, dans lequel ledit second bras (32) est prévu avec une élasticité supérieure comparativement audit élément de couplage (21) pour coulisser longitudinalement par rapport à ladite branche (S) et permettre ainsi audit élément de couplage (21) d'adhérer à ladite surface externe (Se) selon un quelconque type de branche (S), et dans lequel ledit premier bras (31) est un élément indéformable articulé au niveau de ses deux extrémités, respectivement à ladite tige filetée (22) et audit élément de couplage (21) comme une tige de liaison et est susceptible de maintenir l'adhérence de cette dernière à ladite surface (Se) lorsque ledit second bras (32) coulisse.

14. Dispositif porte-lunettes selon la revendication 1 ou 2, dans lequel ledit élément de couplage (21) est muni d'un trou taraudé (25) pour la liaison à ladite tige filetée (22) alignée sur ledit axe de rotation (X) .

15. Dispositif porte-lunettes selon l'une quelconque des revendications précédentes, dans lequel ledit élément magnétique (11) est muni d'un crochet (50) destiné à supporter l'extrémité d'un cordon (51), ledit cordon (51) étant fixé à une branche (S) de ladite paire de lunettes (A) de façon à ouvrir ladite branche (S) quand ledit élément de couplage (21) est séparé dudit élément magnétique (11) en aidant ainsi l'utilisateur à mettre ladite paire de lunettes (A).

16. Dispositif porte-lunettes selon l'une quelconque des revendications précédentes, dans lequel ledit élément magnétique (11), ledit élément de fixation (12) et ledit élément de couplage (21) sont au moins partiellement recouverts de matière plastique ou de caoutchouc de façon à ne pas créer des plis sur lesdits vêtements.

17. Ensemble pour retenir, d'une manière séparable, une paire de lunettes (A) sur les vêtements d'un utilisateur, comprenant :
- un vêtement à porter qui définit au moins un bord (L) ;
- des moyens de support (10) selon l'une quelconque des revendications précédentes, comprenant un élément magnétique (11) et un élément de fixation (12), réalisés en une matière magnétique ou ferromagnétique, ledit élément magnétique (11) et ledit élément de fixation (12) étant susceptibles de s'attirer l'un l'autre par interaction magnétique, lesdits moyens de support (10) s'engageant sur lesdits vêtements par interposition d'au moins ledit bord (L) entre ledit élément magnétique (11) et ledit élément de fixation (12) ; et
- des moyens de retenue (20) selon l'une quelconque des revendications précédentes, qui sont destinés à être associés mécaniquement à ladite paire de lunettes (A) et peuvent être reliés de façon amovible auxdits moyens de support (10) par interaction magnétique avec ledit élément magnétique (11) de façon à retenir ladite paire de lunettes (A) sur lesdits moyens de support (10) et ainsi sur lesdits vêtements.

18. Ensemble pour maintenir, d'une manière séparable, une paire de lunettes (A) sur les vêtements d'un utilisateur, comprenant :
- un vêtement à porter qui définit au moins un bord (L) ;
- des moyens de support (10), comprenant un élément magnétique (11) et un élément de fixation (12), réalisés en une matière magnétique ou ferromagnétique, ledit élément magnétique (11) et ledit élément de fixation (12) étant susceptibles de s'attirer l'un l'autre par interaction magnétique, lesdits moyens de support (10) s'engageant sur lesdits vêtements par interposition d'au moins ledit bord (L) entre ledit élément magnétique (11) et ledit élément de fixation (12) ; et
- des moyens de retenue (20), qui sont destinés à être associés mécaniquement à ladite paire de lunettes (A) et peuvent être reliés de façon amovible auxdits moyens de support (10) par interaction magnétique avec ledit élément magnétique (11) de façon à retenir ladite paire de lunettes (A) sur lesdits moyens de support (10) et ainsi sur lesdits vêtements ;
lesdits moyens de retenue (20) étant mécaniquement reliés à ladite paire de lunettes au niveau de l'axe de rotation (X) de l'une des branches (S) de ladite paire de lunettes (A) par rapport à la face (F), lesdits moyens (20) comprenant :
- une tige filetée (22) pour relier ladite branche (S) à ladite face (F) le long d'un axe de rotation (X) , munie d'une partie d'extrémité saillante (22a) ; et
- au moins un élément de couplage (21), réalisé en une matière magnétique ou ferromagnétique, qui est susceptible d'être reliée magnétiquement à l'élément magnétique (11) desdits moyens de support (10) et est susceptible d'être mécaniquement relié à ladite tige filetée (22) au niveau de la partie d'extrémité (22a) ;
ledit élément de couplage (21) étant agencé en ligne avec ledit axe de rotation (X) ou, en référence aux branches en position ouverte, étant agencé entre ledit axe de rotation (X) et l'extrémité libre de ladite branche, de sorte que, quand ledit élément de couplage (21) se déplace en contact avec ledit élément magnétique (11) avec les branches de ladite paire de lunettes (A) pliées sur ladite face (F) en position fermée, l'interaction magnétique entre ledit élément magnétique (11) et ledit élément de couplage (21) oriente lesdites branches vers lesdits vêtements, en empêchant ainsi les verres supportés par ladite face (F) de venir au contact des vêtements eux-mêmes.

19. Procédé pour suspendre une paire de lunettes (A) à un vêtement, comprenant les étapes suivantes :
- fournir un dispositif ou un ensemble selon l'une quelconque des revendications précédentes ;
- prévoir un vêtement muni d'au moins un bord (L) ;
- interposer ledit bord (L) entre ledit élément magnétique (11) et ledit élément de fixation (12) de sorte que lesdits deux derniers éléments, s'attirant par interaction magnétique, se maintiennent l'un l'autre sur ledit bord ;
- associer lesdits moyens de retenue (20) à ladite paire de lunettes (A) ; et
- relier magnétiquement lesdits moyens de retenue (20) auxdits moyens de support (10), en maintenant ainsi ladite paire de lunettes (A) sur lesdits vêtements.
